# EUROPÄISCHE PATENTSCHRIFT

(11) **EP 1 661 613 B1**
(45) Veröffentlichungstag und Bekanntmachung des Hinweises auf die Patenterteilung: **01.04.2009**
(21) Anmeldenummer: 05024765.9
(22) Anmeldetag: 12.11.2005
(51) Int. Cl.: B01D 46/04

(54) **Flexible Filteranordnung**
Flexible filter system
Dispositif de filtre flexible

(30) Priorität: 27.11.2004 DE 102004057335
(43) Veröffentlichungstag der Anmeldung: 31.05.2006
(73) Patentinhaber: L. B. Bohle Maschinen + Verfahren GmbH, 59320 Ennigerloh (DE)
(72) Erfinder: Bohle, Lorenz, 59320 Ennigerloh (DE)
(74) Vertreter: Habbel, Hans-Georg

(56) Entgegenhaltungen:
- EP-A- 0 859 658
- US-A- 5 409 512

## Beschreibung

Die Erfindung bezieht sich auf eine flexible Filteranordnung gemäß dem Oberbegriff des Hauptanspruches.

Derartige flexible Filteranordnungen sind beispielsweise aus der US 4 247 313 A bekannt. Hierbei besteht die eigentliche Filteranordnung aus Stützstreben, an deren Außenseite ein flexibles Filtermedium angeordnet ist. Durch Führen eines Gasstromes auf die Außenseite des Filtermediums lagern sich an der Außenseite des Filtermediums die im Gasstrom enthaltenen Feststoffpartikel ab, wobei gleichzeitig das eigentliche flexible Filtermedium entsprechend verformt wird. Um ein Reinigen des Filtermediums zu erreichen, ist es durch diese Literaturstelle bekanntgeworden, einen Spülsturm stoßartig in das Innere der eigentlichen Filteranordnung zu führen, wodurch das flexible Filtermedium nach außen gewölbt wird und die sich an der Außenseite des Filtermediums angesammelten Feststoffpartikel abgeschleudert werden.

Aus der EP 0 859 658 B1 ist eine kompakte flexible Filteranordnung bekanntgeworden, bei welcher das eigentliche Filtermedium mittels eines Klemmmechanismus am oberen Ende des starren Rahmens befestigt ist. Aus dieser Literaturstelle ist auch bekannt, in einem größeren Gehäuse mehrere Filteranordnungen unterzubringen, wobei die einzelnen Filteranordnungen mit einem mit Gewinde versehenen Stab an einem Trägeraufbau festgelegt werden können. Diese Anordnung hat den Nachteil, daß zum Auswechseln des eigentlichen Filtermediums in das Gehäuse eingegriffen werden muß und eine Schlauchklemme am oberen Ende des Filtermediums gelöst werden muß. Eine solche Arbeit ist gesundheitsgefährdend und schwierig und somit zusätzlich kostenaufwendig. Die Befestigung der eigentlichen Filteranordnung über einen Schraubstab am eigentlichen Trägeraufbau ist ebenfalls unglücklich, da zum Befestigen das gesamte Filterelement gedreht werden muß, also auch wieder gehandhabt werden muß.

Das Dokument US 5409512 offenbart eine flexible Filteranordnung wobei eine Umlenkvorrichtung vorgesehen ist, die den zum Reinigen benötigten Impulsstrom auf das Innere des Flexiblen Filtermediums umleitet und dadurch eine gute Reinigung bewirkt

In der älteren, aber nicht vorveröffentlichten EP 1 547 663 wird eine flexible Filteranordnung beschrieben, wobei das Filtermedium von einem starren, aber gasdurchlässigen Rahmen getragen wird und ein in das Innere der Filteranordnung reichender Injektor vorgesehen ist, wobei eine zentrisch unter der Austrittsöffnung des Injektors angeordnete Umlenkvorrichtung eingebaut ist.

Der Erfindung liegt daher die Aufgabe zugrunde, eine flexible Filteranordnung zu schaffen, bei der ein problemloses Festlegen des eigentlichen Filtermediums an dem das Filtermedium tragenden Rahmenkorb möglich ist und die Festlegung des Rahmenkorbes an der Trennwand oder dem Trägeraufbau von unten her ohne großen Aufwand möglich ist, so daß ein schnelles und problemloses Auswechseln sowohl der gesamten Filteranordnung wie auch nur des flexiblen Filtermediums ermöglicht wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß die im nicht vorveröffentlichten Stand der Technik beschriebene Umlenkvorrichtung, die unterhalb des Injektors angeordnet ist, an der oberen Trennwand vorgesehen wird oder an dem Trägerbauteil und daß diese Umlenkvorrichtung an ihrem unteren Ende ein Befestigungshilfsmittel aufweist, wobei der Rahmenkorb eine von seinem unteren Ende her betätigbare Befestigungsvorrichtung besitzt, die mit dem Befestigungshilfsmittel zusammenwirken kann.

Die Anordnung dieser Umlenkvorrichtung nunmehr an der oberen Trennwand, und zwar eine feste Anordnung, bewirkt zwar das gute Umlenken des Reinigungsstromes, gibt aber die Möglichkeit, nunmehr an dieser Umlenkvorrichtung auch den eigentlichen Rahmenkorb zusammen mit dem Filtermedium anzubringen. Wird dann eine Befestigungsvorrichtung eingesetzt, die vom unteren Ende des Rahmenkorbes betätigt werden kann, ist also ein Abnehmen des Rahmenkorbes und damit des flexiblen Filtermediums von unten her möglich, ohne daß diese Arbeit gesundheitsgefährdend und aufwendig ist.

Als Befestigungsvorrichtung wird gemäß der Erfindung eine Kugelsperrbolzeneinrichtung vorgeschlagen. In gleicher Weise könnte aber auch ein Bajonettverschluß oder eine sonstige Befestigungsvorrichung eingesetzt werden, wobei entscheidend ist, daß sie vom unteren Ende des Rahmenkorbes betätigt nunmehr den Rahmenkorb an der Umlenkvorrichtung festlegt und dabei das obere Ende des Rahmenkorbes, d. h. also den Rahmenring in eine an der Trennwand angeordnete Buchse führt, durch deren Randkanten nunmehr das am Rahmenring gelagerte Filtermedium am Rahmenring unlösbar festgelegt wird. Erst wenn der Rahmenkorb aus dieser Buchse nach unten abgesenkt wird, ist auch das Lösen des flexiblen Filtermediums vom Rahmenring möglich.

Diese Gesamtanordnung stellt nicht nur eine sichere und hoch wirksame Filteranordnung dar, sondern schafft auch die Möglichkeit, den eigentlichen Rahmenkorb mit seinem flexiblen Filtermedium möglichst einfach auszuwechseln, so daß dieses Auswechseln wenig Zeit beansprucht und dadurch die Unterbrechung der eigentlichen Filtration relativ kurz ist.

Beim Einsatz eines Kugelsperrbolzens wird gemäß einem Merkmal der Erfindung vorgeschlagen, daß die in der Umlenkvorrichtung am unteren Ende vorgesehene Aufnahme, die das Befestigungshilfsmittel darstellt, mit zwei Rasternuten, die übereinander angeordnet sind, versehen wird, so daß, wenn ein Verstopfen dieser Öffnung erfolgt, eine zweite Rasternut zum Einsatz kommen kann.

Ein Ausführungsbeispiel der Erfindung wird nachfolgend anhand der Zeichnungen erläutert. Die Zeichnungen zeigen dabei in
- Fig. 1: eine Filteranordnung bei abgenommenem Rahmenkorb und in
- Fig. 2: die Anordnung gemäß Fig. 1, wobei aber der Rahmenkorb nunmehr an der Umlenkvorrichtung und in der Buchse der Trennwand festgelegt ist.
- Fig. 3: zeigt die an sich zum Stand der Technik gehörende Kugelsperrbolzenvorrichtung zur Erläuterung deren Wirkungsweise.

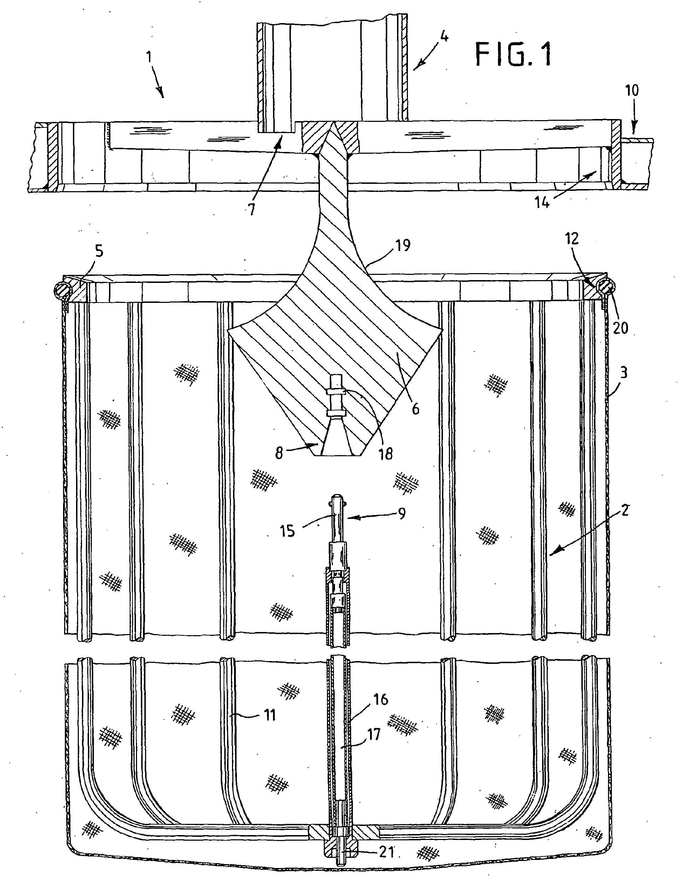

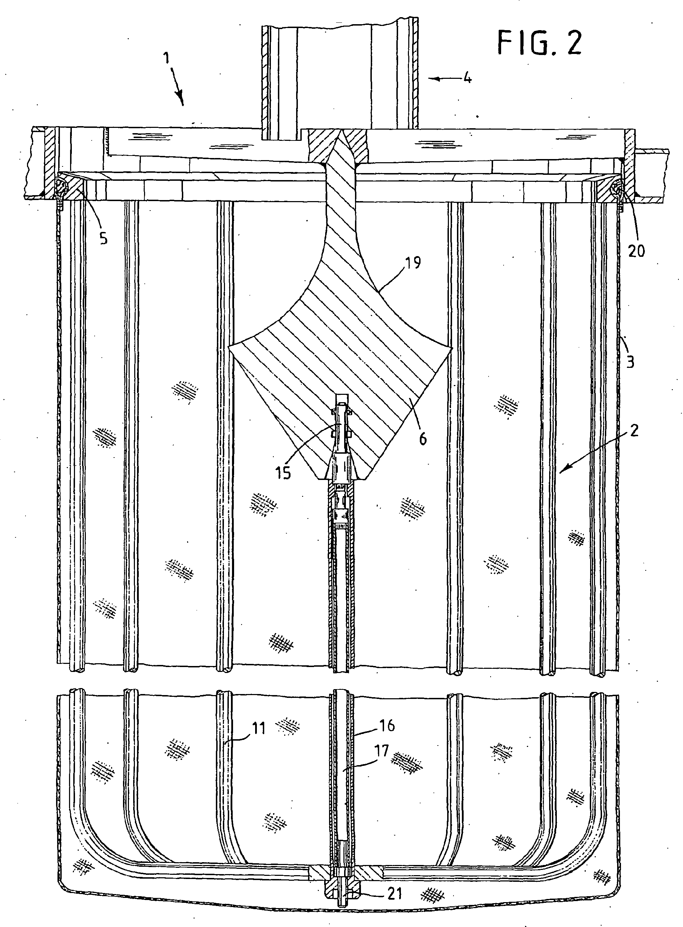

In den Fig. 1 und 2 ist mit 1 eine Filteranordnung bezeichnet, bei der ein Rahmenkorb 2, der aus Stützstreben 11 besteht, das flexible Filtermedium 3 halten kann. Bei dem dargestellten Ausführungsbeispiel werden die Stützstreben 11 des Rahmenkorbes 2 auch im unteren Bereich und in der Bodenfläche des Rahmenkorbes 2 vorgesehen, wobei es selbstverständlich aber möglich ist, daß die eigentliche Bodenfläche des Rahmenkorbes 2 durch eine Bodenplatte gebildet werden kann.

Die oberen Enden der Stützstreben 11 werden in einem Rahmenring 5 zusammengefaßt, der an seiner Außenseite eine nach außen offene Ringnut 12 aufweist.

Ein Injektorrohr ist bei 4 dargestellt und mündet in das Innere der Filteranordnung 1, wobei unterhalb der Mündung dieses Injektorrohres 4 eine Trennwand 10 vorgesehen ist, an der mehrere in der Zeichnung nicht dargestellte Filteranordnungen 1 befestigt sein können.

An dieser Trennwand 10 ist die Umlenkvorrichtung 6 fest angeordnet und die Trennwand 10 weist im Bereich der Filteranordnung 1 eine Buchse 14 auf, deren Weite so groß ist, daß sie über den Rahmenring 5 greifen kann, wenn der Rahmenkorb 2 in die Buchse 14 nach oben geführt wird.

Die Austrittsöffnung 7 des Injektors 4 mündet auf eine Kegelmantelfläche 19 der Umlenkvorrichtung 6.

In der nach außen offenen Ringnut 12 ist das flexible Filtermedium 3 mittels eines elastischen Ringes 20 eingelegt, wobei diese Befestigung nicht ausreichen würde, wenn der Reinigungsimpulsstrom durch den Injektor 4 in die Filteranordnung 1 geführt wird. Vielmehr würde bei diesem starken Druckanstieg das flexible Filtermedium 3 vom Rahmenkorb 2 weggeblasen werden.

Am unteren Ende der Umlenkvorrichtung 6 ist ein Befestigungshilfsmittel 8 vorgesehen, das als Bohrung ausgebildet ist und das über seine Länge gesehen zwei übereinander angeordnete Rasternuten 18 aufweist.

Am unteren Ende des Rahmenkorbes 2 ist ein Trägerrohr 16 angeordnet, das an seinem oberen Ende eine Befestigungsvorrichtung 9 trägt, die bei dem dargestellten Ausführungsbeispiel als Kugelklemmbolzen 15 ausgebildet ist. Innerhalb des Trägerrohres 16 ist ein Betätigungsrohr 17 angeordnet, dessen Betätigungsstößel 21 unten über den Boden des Rahmenkorbes 2 reicht und daher von außen und von unten betätigt werden kann.

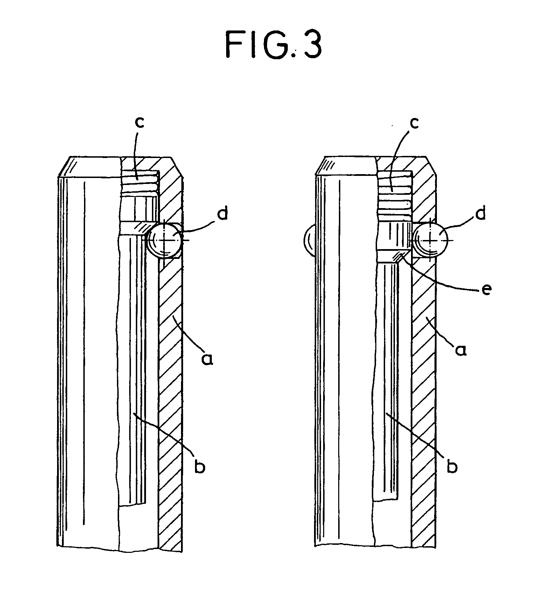

In Fig. 3 ist rein schematisch eine Kugelsperrbolzenvorrichtung dargestellt. Diese besteht aus einem Rohrmantel a, in dem sich ein Kolben b führt. Der Kolben b wird in dem Rohrmantel a von einer Feder c beaufschlagt und kann von unten her bei Betätigung des Stößels 17 nach oben gegen die Wirkung der Feder c geführt werden.

Im Rohrmantel a sind eine oder mehrere Kugeln d angeordnet, die vom oberen Ende des Kolbens b beaufschlagt werden, wenn dieser in der von der Feder c beaufschlagten Stellung steht. Wird der Druck der Feder c durch Betätigen überwunden, gelangt in den Bereich der Kugel d eine Schrägfläche e des Kolbens b, und nunmehr kann die Kugel d aus der in der rechten Darstellung gezeigten Stellung in die linke Stellung gelangen, wodurch sich die Sperrvorrichtung lösen läßt.

Die Betätigung der erfindungsgemäßen Einrichtung ist also wie folgt:

Nachdem auf dem Rahmenkorb 2 das flexible Filtermedium durch Einlegen des elastischen Ringes 20 in die Ringnut 12 angelegt ist, wird nunmehr der Rahmenkorb 2 angehoben, wobei einerseits der Kugelsperrbolzen 15 in die Bohrung der Umlenkvorrichtung 6 gelangt und gleichzeitig die Außenseite des elastischen Ringes 20 in den Bereich der Buchse 14 kommt und von den Wänden der Buchse nunmehr beaufschlagt wird, so daß ein Herauslösen des elastischen Ringes 20 aus der Ringnut 12 nicht möglich ist. Diese sogenannte Arbeitsstellung ist in Fig. 2 dargestellt. Soll nunmehr das Filtermedium abgenommen werden, z. B. zu Reinigungszwecken od. dgl., ist lediglich ein Betätigen des Betätigungsstößels 21 erforderlich, um das Kugelgesperre des Kugelsperrbolzens zu lösen, wodurch dann ein Herunterziehen des gesamten Rahmenkorbes 2 einschl. Filtermedium 3 möglich wird.

## Patentansprüche

1. Flexible Filteranordnung (1), wobei ein flexibles Filtermedium (3) von einem von einer oberen Trennwand abnehmbaren, starren, aber gasdurchlässigen Rahmenkorb (2) getragen ist und durch Gasimpulse bewegt und **dadurch** gereinigt werden kann und eine Umlenkvorrichtung (6) in der Filteranordnung (1) vorgesehen ist, die zentrisch unter der Austrittsöffnung (7) eines Injektors (4) angeordnet ein Umlenken des austretenden Spülgases bewirkt, **dadurch gekennzeichnet,**
a) **daß** die Umlenkvorrichtung (6) an der oberen Trennwand (10) fest angeordnet ist,
b) die Umlenkvorrichtung (6) an ihrem unteren Ende ein Befestigungshilfsmittel (8) aufweist,
c) der Rahmenkorb (2) eine von seinem unteren Ende her betätigbare Befestigungsvorrichtung (9) aufweist, die mit dem Befestigungshilfsmittel (8) zusammenwirken kann.

2. Filteranordnung nach Anspruch 1, **dadurch gekennzeichnet, daß** der Rahmenkorb (2) aus Stützstreben (11) besteht, die an einem oberen Rahmenring (5) verankert sind.

3. Filteranordnung nach Anspruch 1 oder 2, **dadurch gekennzeichnet, daß** der Rahmenring (5) eine nach außen offene Ringnut (12) aufweist.

4. Filteranordnung nach einem oder mehreren der vorhergehenden Ansprüche, **dadurch gekennzeichnet, daß** die obere Trennwand (10) im Bereich der Filteranordnung (1) als nach unten offene Buchse (14) ausgebildet ist.

5. Filteranordnung nach einem oder mehreren der vorhergehenden Ansprüche, **dadurch gekennzeichnet, daß** die Befestigungsvorrichtung (9) als Kugelsperrbolzen (15) ausgebildet ist, die am Ende eines Trägerrohres (16) angeordnet ist, wobei im Trägerrohr (16) eine Betätigungsstange (17) geführt ist.

6. Filteranordnung nach einem oder mehreren der vorhergehenden Ansprüche, **dadurch gekennzeichnet, daß** das zur Aufnahme des Kugelsperrbolzens (15) bestimmte Befestigungshilfsmittel (8) mehrere Rasternuten (18) aufweist.

7. Filteranordnung nach einem oder mehreren der vorhergehenden Ansprüche, **dadurch gekennzeichnet, daß** das flexible Filtermedium (3) mittels eines elastischen Ringes in die Ringnut (12) des Rahmenringes (5) eingreift.

8. Filteranordnung nach Anspruch 1, **dadurch gekennzeichnet, daß** die Umlenkvorrichtung (6) kegelförmig ausgebildet ist und die Kegelspitze (8) zur Austrittsöffnung (7) des Injektors (2) bzw. zur Trennwand (10) hin gerichtet ist.

9. Filteranordnung nach Anspruch 8, **dadurch gekennzeichnet, daß** die Kegelmantelfläche (19) der Umlenkvorrichtung (6) konkav gewölbt ist.

## Claims

1. Flexible filter system (1) where a flexible filter medium (3) is carried by a rigid but gas-permeable containing frame (2) which can be detached from an upper separating element and which filter medium (3) can be moved by gas pulses and thereby cleaned and where a deflection device (6) which, disposed centrically under the outlet hole (7) of an injector (4), causes the emerging backwashing gas to be deflected, is provided in the filter system (1), **characterised in that**
a) the deflection device (6) is rigidly attached to the upper separating element (10),
b) the deflection device (6) incorporates at its lower end a fastening means (8),
c) the containing frame (2) incorporates a fastening device (9) which can be actuated from its lower end and which can co-act with the fastening means (8).

2. Filter system in accordance with claim 1, **characterised in that** the containing frame (2) consists of support elements (11) fixed to an upper frame ring (5).

3. Filter system in accordance with claim 1 or 2, **characterised in that** the frame ring (5) incorporates an annular groove (12) which is open to the outside.

4. Filter system in accordance with one or more of the foregoing claims, **characterised in that** the upper separating element (10) in the area of the filter system (1) is constructed as a casing (14) which is open at the bottom.

5. Filter system in accordance with one or more of the foregoing claims, **characterised in that** the fastening device (9) is constructed as a quick-release pin (15) and is disposed on the end of a tubular bearer (16) in which an actuating rod (17) is disposed.

6. Filter system in accordance with one or more of the foregoing claims, **characterised in that** the fastening means (8) provided to receive the quick-release pin (15) incorporates a number of detent grooves (18).

7. Filter system in accordance with one or more of the foregoing claims, **characterised in that** the flexible filter medium (3) is fixed in the annular groove (12) of the frame ring (5) with the aid of an elastic ring.

8. Filter system in accordance with claim 1, **characterised in that** the deflection device (6) is constructed in the form of a cone and the tip of the cone (8) is directed at the outlet hole (7) of the injector (2) or at the separating element (10).

9. Filter system in accordance with claim 1, **characterised in that** the surface (19) of the conical portion of the deflection device (6) is made concave.

## Revendications

1. Dispositif de filtre flexible (1), un média filtrant flexible (3) étant supporté par un panier-cadre (2) rigide mais perméable aux gaz, amovible d'une paroi séparatrice supérieure, et étant déplacé - ce qui permet de le nettoyer - par des impulsions de gaz, et un dispositif de renvoi (6) étant prévu dans le dispositif de filtre flexible (1), dispositif qui, agencé centré sous l'orifice de sortie (7) d'un injecteur (4), provoque un renvoi du gaz de rinçage sortant, **caractérisé en ce que**
a) Le dispositif de renvoi (6) est agencé fixe contre la paroi séparatrice supérieure (10),
b) Le dispositif de renvoi (6) présente à son extrémité inférieure un accessoire de fixation (8),
c) Le panier-cadre (2) présente un dispositif de fixation (9) actionnable depuis son extrémité inférieure, dispositif qui peut interagir avec l'accessoire de fixation (8).

2. Dispositif de filtre flexible selon la revendication 1, **caractérisé en ce que** le panier-cadre (2) se compose d'entretoises de soutien (11) ancrées contre un anneau (5) supérieur de cadre.

3. Dispositif de filtre flexible selon la revendication 1 ou 2, **caractérisé en ce que** l'anneau (5) de cadre présente une gorge annulaire (12) ouverte vers l'extérieur.

4. Dispositif de filtre flexible selon une ou plusieurs des revendications précédentes, **caractérisé en ce que** la paroi séparatrice (10) supérieure est configurée, dans la zone du dispositif de filtre flexible (1), comme une douille (14) ouverte vers le bas.

5. Dispositif de filtre flexible selon une ou plusieurs des revendications précédentes, **caractérisé en ce que** le dispositif de fixation (9) est configuré comm un goujon de blocage (15) à billes, dispositif de fixation qui est agencé à l'extrémité d'un tube support (16), une tige de guidage (17) étant guidée à l'intérieur du tube support (16).

6. Dispositif de filtre flexible selon une ou plusieurs des revendications précédentes, **caractérisé en ce que** pour recevoir le goujon de blocage (15) à billes, certains accessoires de fixation (8) présentent plusieurs gorges de crantage (18).

7. Dispositif de filtre flexible selon une ou plusieurs des revendications précédentes, **caractérisé en ce que** le média filtrant flexible (3) engrène par le biais d'une bague élastique dans la gorge annulaire (12) de l'anneau (5) du cadre.

8. Dispositif de filtre flexible selon la revendication 1, **caractérisé en ce que** le dispositif de renvoi (6) est configuré en cône et que la pointe (8) du cône regarde vers l'orifice de sortie (7) de l'injecteur (2) et vers la paroi séparatrice (10).

9. Dispositif de filtre flexible selon la revendication 8, **caractérisé en ce que** la surface enveloppante (19) du dispositif de renvoi (6) conique est configurée concave.
